# FASCICULE DE BREVET EUROPEEN

(11) **EP 1 543 942 B1**
(45) Date de publication et mention de la délivrance du brevet: **19.07.2006**
(21) Numéro de dépôt: 04106341.3
(22) Date de dépôt: 07.12.2004
(51) Int. Cl.: B29C 70/46, B29C 51/08

(54) **Procédé de formage par estampage à chaud de pièces de tolerie complexes en matériau composite et outillage pour sa mise en oeuvre**
Formverfahren durch Heizprägen von komplexen Platten aus Verbundwerkstoff und Vorrichtung zu dessen Durchführung
Method for hot stamping complex sheet elements from composite material and apparatus for such a method

(30) Priorité: 16.12.2003 FR 0314725
(43) Date de publication de la demande: 22.06.2005
(73) Titulaire: AIRBUS France, 31060 Toulouse (FR)
(72) Inventeur: Chotard, Florian, 44420 La Turballe (FR)
(74) Mandataire: Schmit, Christian Norbert Marie

(56) Documents cités:
- DE-A- 4 234 002
- DE-C- 742 682

## Description

La présente invention a trait à la tôlerie complexe en matériau composite et plus précisément à la réalisation de structures ou pièces formées d'éléments à paroi relativement mince, agencés dans plusieurs plans pour constituer par exemple une boîte, un carter, un panneau à caissons, ladite paroi étant formée d'un ou plusieurs plis constitués de fibres minérales ou synthétiques, par exemple de verre, de silice, de carbone ou de fibres céramiques, pré-imprégnées d'une résine appropriée, notamment une résine thermoplastique.

La technique traditionnelle utilisée pour la réalisation de ce type de pièces consiste à effectuer l'estampage à chaud d'un flan pré-découpé, à l'aide d'un outillage constitué d'une matrice et d'un poinçon monobloc mettant en forme en une seule passe le flan contre les parois de la matrice.

La réalisation de bords tombés avec ce type d'outillage pose des problèmes.

En effet, au cours de la descente du poinçon dans la matrice, il s'opère sur les flancs du poinçon entre ce dernier et la matrice un serrage du flan générant des frictions entraînant des désordres dans la zone de cintrage du flan et également dans les bords tombés de la pièce finale.

C'est ainsi que dans la zone de cintrage du flan, où s'opère un pliage généralement à 90°, se produit un phénomène dit d'essorage consistant en un étirement des fibres avec réduction d'épaisseur de la paroi du flan, tendance des fibres à se tasser en direction du centre de la matrice et expulsion vers l'extérieur de la résine d'imprégnation.

Ce phénomène est relativement faible si la longueur du bord tombé est, elle aussi, relativement faible, par exemple inférieure à 30mm. Au delà, les frottements sont trop importants. Par ailleurs, plus la paroi du bord tombé est mince et plus ledit phénomène d'essorage est important.

Au droit des bords tombés, la mauvaise transformation des efforts verticaux du poinçon en efforts horizontaux de pressage des bords tombés peut entraîner des désorientations des fibres, un glissement des plis du flan, des variations locales d'épaisseur et des voilages ou des vrillages de fibres desdits bords tombés, ainsi que des zones de pliage de la pièce ainsi mise en forme.

Enfin, avec un tel outillage, le démoulage peut poser quelques difficultés du fait du serrages des bords tombés, l'obtention, par ailleurs, de bords avec une inclinaison vers l'intérieur étant totalement impossible.

Le document DE-A-742 682 décrit les préambules des revendications 1 et 2.

La présente invention vise à remédier aux inconvénients ci-dessus.

A cet effet, l'invention a pour objet un procédé de formage par estampage à chaud de pièces de tôlerie complexes constituées d'un élément monobloc comportant plusieurs parties d'épaisseur relativement mince agencées dans différents plans sécants, à partir d'un flan constitué d'au moins un pli de fibres pré-imprégnées d'une résine thermoplastique, dans lequel ledit flan préalablement chauffé est mis en forme dans un ensemble comprenant un poinçon et une matrice, caractérisé en ce que :
- en une première étape de descente du poinçon dans la matrice, la partie dudit flan devant constituer le fond ou analogue de la pièce à obtenir est pressée contre le fond de la matrice par une première partie 8 inférieure du poinçon, puis
- en une seconde étape de déploiement d'une ou plusieurs parties latérales du poinçon, la ou les parties du flan constituant le ou les bords tombés de ladite pièce, sont pressés contre les flancs de la matrice par une rotation desdites parties latérales autour d'axes d'articulation desdites parties latérales à la partie inférieure, l'ébauche ainsi obtenue étant ensuite démoulée.

Un tel procédé permet de mettre en place et presser contre le fond de la matrice le fond de l'ébauche sans porter atteinte à l'intégrité physique des parties du flan entourant ledit fond, qui glissent en pivotant sur le rebord périphérique interne de la matrice et viennent se placer en regard et à faible distance des flancs internes de la matrice au cours de la descente du poinçon, sans être pressés par ce dernier contre lesdits flancs de la matrice.

C'est seulement au cours de la seconde étape que la zone cintrée de l'ébauche et le ou les bords tombés vont être à leur tour pressés contre la matrice éliminant ainsi ou réduisant substantiellement les conséquences néfastes du phénomène d'essorage dans lesdites parties cintrées et les désordres physiques constatés dans les bords tombés obtenus avec les procédés traditionnels.

L'invention a également pour objet un outillage de mise en oeuvre dudit procédé, constitué d'un poinçon et d'une matrice, caractérisé en ce que ledit poinçon est constitué :
- d'un corps principal à déplacement uni axial en regard de la matrice,
- d'un ensemble de pressage en forme solidaire dudit corps principal comprenant :
   • une première partie présentant une face de moulage correspondant à ladite partie de fond ou analogue de ladite ébauche à réaliser,
   • une seconde partie présentant une ou plusieurs faces de moulage correspondant audits bords tombés de l'ébauche,
   • ladite seconde partie étant montée mobile entre deux positions, l'une, dite d'expansion, dans laquelle les faces de moulage desdites première et seconde parties définissent une surface de moulage correspondant à la face interne de ladite ébauche et, l'autre, dite de rétraction, dans laquelle ladite seconde partie est en retrait par rapport à ladite première position, ladite seconde partie étant constituée de pièces dont la face de moulage correspond aux flancs internes de l'ébauche ainsi qu'à la zone de congé de raccordement des flancs internes au fond, lesdites pièces étant articulées sur ladite première partie à la périphérie de la ladite première partie,
- et de moyens aptes à :
   • maintenir ladite seconde partie en position de rétraction,
   • et à la faire passer en position d'expansion au plus tôt à l'instant du contact dudit flan contre le fond de la matrice.

Un tel outillage présente l'avantage de réaliser la mise en forme et le pressage des flancs de la future ébauche et des parties cintrées de raccordement au fond, après la mise en forme et un début de pressage dudit fond et de manière progressive suivant une cinématique de déplacement des parties mobiles du poinçon ménageant au mieux l'ébauche et supprimant notamment pratiquement le phénomène d'essorage dans les angles et de déformation des mailles des tissus des plis et de glissement anarchique de ces derniers, tout en assurant une bien meilleure régularité d'épaisseur desdits flancs.

D'autres caractéristiques et avantages ressortiront de la description qui va suivre d'un mode de réalisation de l'outillage de l'invention, description donnée à titre d'exemple uniquement et en regard des dessins sur lesquels :
- Figure 1 représente en perspective plongeante une ébauche d'une pièce de tôlerie en matériau composite en forme de boîte ;
- Figure 2 est une vue en coupe axiale verticale d'un outillage d'estampage selon l'invention, prêt au formage d'un flan ;
- Figure 3 illustre la position du poinçon de l'outillage à la fin de la première étape de formage ;
- Figure 4 illustre la position du poinçon à la fin de la seconde étape, et
- Figure 5 représente un mode de réalisation particulier d'un poinçon vu en position renversée.

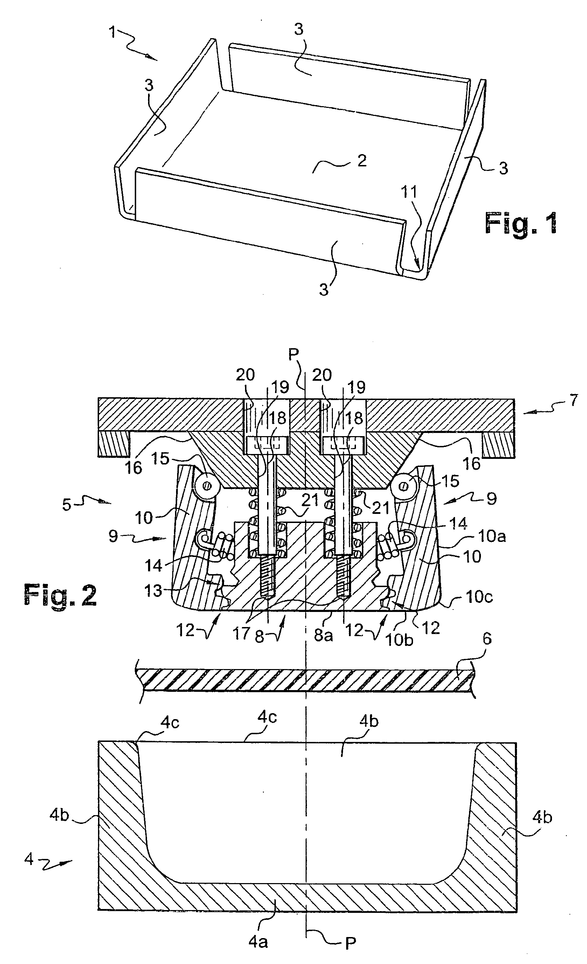

Sur la figure 1, on a représenté une ébauche de pièce de tôlerie en matériau composite 1 en forme générale de boîte parallélépipédique, comprenant un fond 2 et quatre côtés constitués par des bords tombés 3 formant avec le fond 2 un angle droit.

L'ébauche forme un ensemble monobloc réalisé à partir d'un flan de départ pré-découpé constitué d'un empilage de plis par exemple de tissus de fibres de verre ou de carbone pré-imprégnées d'une résine thermoplastique.

L'invention concerne la réalisation de ce type de pièce par estampage à l'aide d'un outillage comprenant une matrice aux formes et dimensions extérieures de l'ébauche 1 et un poinçon approprié aux formes et dimensions intérieures de ladite ébauche.

L'outillage selon l'invention, représenté en figure 2, comprend une matrice 4, qui peut être une matrice conventionnelle, apte par exemple à obtenir une ébauche du type de l'ébauche 1. Elle comprend un fond de matrice 4a et quatre flancs de matrice 4b délimitant un orifice supérieur de matrice 4c à bord arrondi.

L'outillage comprend également un poinçon 5 qui présente une structure particulière apte à effectuer le formage par estampage d'un flan 6 préalablement découpé et chauffé destiné à l'obtention de l'ébauche 1.

Le poinçon 5 est constitué d'un corps principal 7, d'une première partie monobloc 8 de pressage en forme formée de quatre pièces distribuées autour de la partie centrale 8.

La première partie 8 présente une face de moulage 8a rectangulaire conformée en correspondance avec la partie centrale du fond 2 de l'ébauche 1 à obtenir.

Chaque pièce 10 de la seconde partie 9 de moulage correspond à un bord tombé 3 de ladite ébauche 1 et présente une première face de moulage 10a correspondant au flanc interne d'un bord 3, une seconde face de moulage 10b correspondant au pourtour du fond 2 et complétant la surface 8a, et une troisième surface 10c de raccordement entre les surfaces 10a et 10b, correspondant à la zone du congé 11 de raccordement entre les flancs internes des bords tombés 3 et le fond 2 de l'ébauche 1.

Les quatre pièces 10 sont articulées sur la partie 8 autour de quatre axes horizontaux orthogonaux à la direction du déplacement P du poinçon par rapport à la matrice 4. La position desdits axes est repérée en 12 sur la figure 2, le plus près possible de la zone de séparation entre les éléments 8 et 10, à la périphérie de la surface 8a. A cet effet, les parties en regard des éléments 8, 10 sont conformées suivant des portions de denture 13 engrenant les unes dans les autres et permettant une rotation des pièces 10 autour desdits axes 12.

Ainsi, les pièces 10, dont la face de moulage 10a, 10b, 10c correspond aux flancs internes 3 de l'ébauche ainsi qu'à la zone de congé 22 de raccordement des flancs internes au fond, constituent la seconde partie et sont articulées sur ladite première partie 8 à la périphérie de la ladite première partie 8.

Les pièces 10 sont par ailleurs retenues sur la pièce 8 par des ressorts de rappel 14.

A leur extrémité supérieure, les pièces 10 sont munies d'un ou plusieurs galets 15 formant cames susceptibles de rouler sur des chemins de came inclinés 16 conformés sur le corps principal 7.

Enfin, la pièce 8 est montée coulissante dans l'axe P sur le corps principal 7.

A cet effet, la pièce 8 comporte au moins deux perçages 17 parallèles à l'axe P, dans lesquels sont vissées des vis 18 traversant des perçages 19 ménagés dans le corps 7.

Les têtes des vis 18 sont susceptibles de se déplacer dans un chambrage 20 réalisé sur la face supérieure du corps 7 et dont le fond sert de butée aux vis qui sont sollicitées par un ressort 21 travaillant en compression interposé entre la pièce 8 et ledit corps 7.

La figure 1 représente le poinçon 5 en position de repos, les pièces 10 étant en position de rétraction, rabattues au plus proche de l'axe P, les galets 15 étant en contact avec les chemins de came 16 à l'extrémité inférieure de ceux-ci.

Le fonctionnement de ce dispositif est le suivant:

Le flan 6 préalablement découpé pour délimiter les bords tombés 3 et placé sur un film support (non représenté) est chauffé puis disposé au dessus de la matrice 4 et le poinçon 5 est pressé par la face 8a sur le flan.

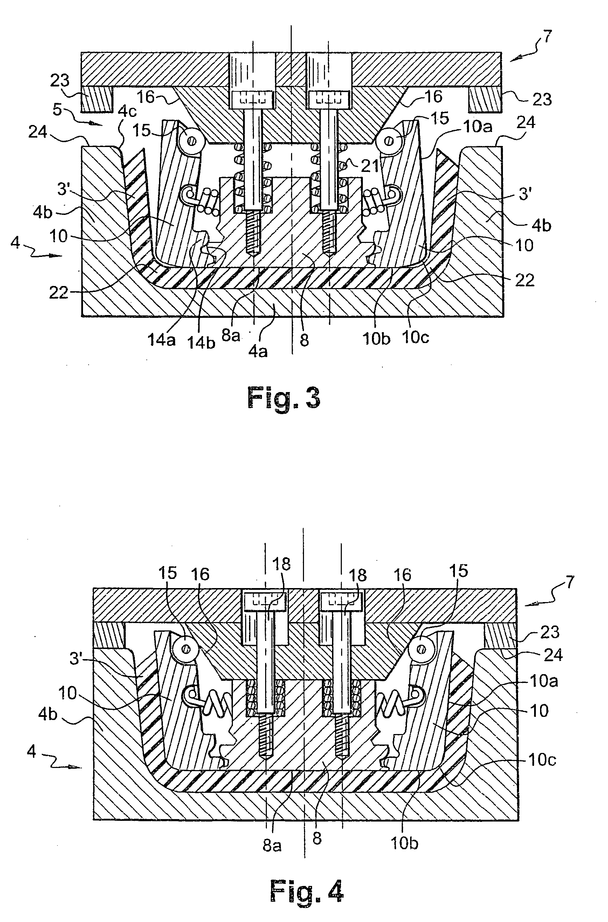

Conformément au procédé selon l'invention, on va en une première étape, illustrée par la figure 4, amener le poinçon jusqu'à presser la partie centrale du flan 6 contre le fond 4a de la matrice, les pièces 10 étant durant toute cette étape maintenues en position rétractée.

Ainsi, pendant tout le trajet de descente du poinçon dans la matrice, les faces 10a et une bonne partie des faces courbes 10c demeurent à distance de la face supérieure du flan 6 en cours de déformation. Le flan 6 pivote en glissant par sa face inférieure sur l'aréte arrondie 4c de la matrice au cours de sa descente dans celle-ci, les parties du flan devant constituer les bords tombés 3 de l'ébauche 1 ainsi que les parties en regard des faces 10c ne subissant aucune compression ou une compression très faible et étant étirées faiblement et de manière douce et progressive, non dommageable.

Au cours de ce déplacement, la force des ressorts 21 étant supérieure à la résistance au formage du flan 6, l'écartement de la pièce 8 vis à vis du corps 7 n'est pas réduit et le système came 15-chemin de came 16 est dans la même position qu'au départ.

La partie 8 va ainsi presser le flan contre la matrice jusqu'à l'atteinte d'une force de pression surmontant celle des ressorts 21, initiant ainsi, la presse continuant à exercer son action sur le poinçon 5, une seconde étape de pressage des parties de flan 3' devant constituer les bords tombés 3 de l'ébauche 1, ainsi que des parties 22 correspondant aux zones de congé 11 de l'ébauche, par les pièces 10.

Ces dernières sont en effet, à partir de ce moment contraintes de se déployer vers la position dite d'expansion, du fait du rapprochement du corps 7 de la partie 8 qui force les galets 15 à rouler sur les chemins de came 16.

Ainsi, le procédé comporte une première étape de descente du poinçon dans la matrice, la partie dudit flan 6 devant constituer le fond 2 ou analogue de la pièce à obtenir 1 est pressée contre le fond 4a de la matrice 4 par une première partie 8 inférieure du poinçon 5, puis une seconde étape de déploiement d'une ou plusieurs parties latérales 10 du poinçon 5, la ou les parties du flan 6 constituant le ou les bords tombés 3 de ladite pièce, sont pressés contre les flancs de la matrice par une rotation desdites parties latérales 10 autour d'axes d'articulation desdites parties latérales à la partie inférieure, l'ébauche ainsi obtenue étant ensuite démoulée.

La figure 4 illustre la fin de cette étape, les pièces 10 étant en position d'expansion, les faces 8a, 10b, 10c, 10a se trouvant alors dans une position correspondant exactement au volume intérieur de l'ébauche 1 et étant parallèles à la paroi interne de la matrice. Une butée périphérique 23 du corps 7 coopère avec la face supérieure 24 de la matrice 4 pour limiter la course des pièces 10 à l'amplitude requise, laquelle peut correspondre avec la venue du corps 7 en contact avec la pièce 8.

Les butées 23, 24 limitent ainsi les efforts appliqués sur l'ébauche en passant le surplus de tonnage par la périphérie de la matrice.

On réalise ainsi une mise en forme et une densification des parois 2 et 3 de l'ébauche 1 en deux temps, d'abord le fond 2, puis les bords tombés 3.

Le démoulage de l'ébauche est très facile, par un mouvement inverse de rétraction des pièces 10, puis d'extraction hors de la matrice de l'ensemble du poinçon.

Il est à noter que le procédé de l'invention permet des formages en contre-dépouille, c'est-à-dire de réaliser, en l'occurrence, des bords tombés 3 légèrement inclinés en direction du centre du fond, en conformant en conséquence les flancs internes de la matrice et les pièces 10 et en limitant leur course d'expansion en ajustant la butée 23 par exemple. L'escamotage des pièces lors de leur rétraction permet l'extraction sans grande difficulté du poinçon. On peut ainsi bien entendu réaliser des bords tombés 3 inclinés vers l'extérieur, il suffit de régler en conséquence, comme dans le cas de contre-dépouille, l'amplitude de l'expansion des pièces 10.

Il est également à noter qu'il est possible d'ajuster le démarrage de l'expansion des pièces 10 par rapport à l'arrivée du flan 6 au contact du fond 4a de la matrice. On peut ainsi ne commencer l'expansion des pièces 10 qu'après une réduction d'épaisseur du flan, déterminée sous la pression de la partie 8. Il suffit, à cet effet, d'ajuster la force des ressorts 21 ou le positionnement mutuel des éléments 15-16.

Le procédé de l'invention résout les problèmes d'essorage des zones soumises à cintrage 22 et de distorsion de fibres dans les bords tombés 3, ce qui permet de réaliser des bords tombés de longueur (ou hauteur) supérieures à celle des bords obtenus suivant les techniques conventionnelles et/ou d'épaisseur sensiblement moindre.

Le procédé permet de mettre en évidence d'autres avantages tels que :
- réduction voire suppression du colmatage bouche-pore notamment dans les parties 22,
- glissement régulier et homogène des plis des bords tombés,
- bonne santé matière et constante notamment dans les zones de pliage 22,
- aucune sous-épaisseur notamment dans lesdites zones de pliage,
- très bonne stabilité de l'ébauche qui ne nécessite pas comme c'est le cas des ébauches obtenues traditionnellement d'étapes de reprise post-estampage de stabilisation dans un conformateur durant le refroidissement complet de l'ébauche, la stabilité de l'ébauche facilitant par ailleurs les usinages ultérieures de perçage et de détourage, ce dernier en particulier, pouvant être réalisé à la cote finie au jet d'eau par exemple,
- non-endommagement du film support du flan permettant un réemploi du film,
- pas de nécessité de conformage de l'ébauche en étuve,
- il est possible de réaliser des ébauches sans limitations particulières de format, notamment des pièces de grande longueur avec des bords tombés ( ou relevés) supérieurs à 90mm.

Le nombre de bords tombés 3 de l'ébauche 1 peut être quelconque, inférieur ou supérieur à quatre.

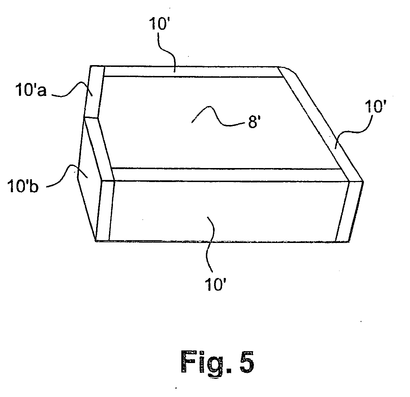

La figure 5 représente un poinçon 5 selon l'invention en position renversée sur lequel on peut observer la partie de moule de fond 8' correspondant à la partie 8 de la figure 2, trois pièces latérales de moulage 10' correspondant à trois des pièces 10 de la figure 2 et, sur le quatrième flanc du poinçon, deux pièces 10'a et 10'b non co-planaires en vue de réaliser un bord tombé à section en toit, le flanc homologue de la matrice ayant bien entendu une même section.

Les différentes pièces 10', 10'a, 10'b sont articulées de la même manière que les pièces 10 et sont commandées en expansion par des surfaces inclinées analogues aux surfaces 16 et qui peuvent être inclinées de manière différente pour obtenir des inclinaisons différentes de bords tombés.

## Revendications

1. Procédé de formage par estampage à chaud de pièces de tôlerie complexes constituées d'un élément monobloc comportant plusieurs parties d'épaisseur relativement mince agencées dans différents plans sécants, à partir d'un flan (6) constitué d'au moins un pli de fibres pré-imprégnées d'une résine thermoplastique, dans lequel ledit flan (6) préalablement chauffé est mis en forme dans un ensemble comprenant un poinçon (5) et une matrice (4), **caractérisé en ce que :**
- en une première étape de descente du poinçon dans la matrice, la partie dudit flan (6) devant constituer le fond (2) ou analogue de la pièce à obtenir (1) est pressée contre le fond (4a) de la matrice (4) par une première partie(8)inférieure du poinçon (5), puis
- en une seconde étape de déploiement d'une ou plusieurs parties latérales (10) du poinçon (5), la ou les parties du flan (6) constituant le ou les bords tombés (3) de ladite pièce, sont pressés contre les flancs de la matrice par une rotation desdites parties latérales (10) autour d'axes d'articulation desdites parties latérales à la partie inférieure, l'ébauche ainsi obtenue étant ensuite démoulée.

2. Outillage pour la mise en oeuvre du procédé selon la revendication 1, constitué d'un poinçon (5) et d'une matrice (4), **caractérisé en ce que** ledit poinçon (5) est constitué :
- d'un corps principal (7) à déplacement uni axial en regard de la matrice (4),
- d'un ensemble de pressage en forme solidaire dudit corps principal (7) comprenant :
• une première partie (8) présentant une face de moulage (8a) correspondant à ladite partie de fond (2) ou analogue de ladite ébauche à réaliser,
• une seconde partie (9) présentant une ou plusieurs faces de moulage (10a à 10c) correspondant audits bords tombés (3) de l'ébauche,
• ladite seconde partie (9) étant montée mobile entre deux positions, l'une, dite d'expansion, dans laquelle les faces de moulage (8a ; 10a à 10d) desdites première (8) et seconde (9) parties définissent une surface de moulage correspondant à la face interne de ladite ébauche et, l'autre, dite de rétraction, dans laquelle ladite seconde partie (9) est en retrait par rapport à ladite première position, ladite seconde partie étant constituée de pièces (10) dont la face de moulage (10a, 10b, 10c) correspond aux flancs internes (3) de l'ébauche ainsi qu'à la zone de congé (22) de raccordement des flancs internes au fond, lesdites pièces (10) étant articulées sur ladite première partie (8) à la périphérie de la ladite première partie (8),
- et de moyens aptes à :
• maintenir ladite seconde partie (9) en position de rétraction,
• et à la faire passer en position d'expansion au plus tôt à l'instant du contact dudit flan (6) contre le fond (4a) de la matrice (4).

3. Outillage selon la revendication 2, **caractérisé en ce que** :
- ladite seconde partie (9) est constituée de pièces (10) dont la face de moulage (10a, 10b, 10c) correspond aux flancs internes (3) de l'ébauche ainsi qu'aux zones cintrées de raccordement desdits flancs (3) audit fond (2), lesdites pièces (10) étant articulées sur ladite première partie (8) au voisinage de la périphérie de sa face de moulage (8a), et rappelées élastiquement dans ladite position de rétraction,
- et lesdits moyens aptes à passer d'une position à l'autre sont constitués :
• d'une part, d'un système (15, 16) de type came-chemin de came, la came (15) étant agencée sur l'un des deux éléments formés par le corps principal (7) et la seconde partie (9) et le chemin (16) étant agencé sur l'autre élément,
• d'autre part, d'un montage de ladite première partie (8) sur le corps principal (7) coulissant axialement au poinçon (5), en sorte de mettre en service ledit système came-chemin de came (15, 16) au plus tôt audit instant du contact dudit flan (6) contre le fond (4a) de la matrice (4).

4. Outillage selon la revendication 3,**caractérisé en ce que** ledit montage coulissant entre ladite première partie (8) sur ledit corps principal (7) est un système à ressort travaillant en compression (21) de rappel de ladite partie (8) en position d'éloignement du corps principal (7).

5. Outillage selon l'une des revendications 2 à 4, **caractérisé en ce qu'**il comporte une fin de course d'enfoncement du poinçon (5) constituée par une butée (23), de préférence réglable, solidaire dudit corps principal (7) et coopérant avec la matrice (4).

6. Outillage selon l'une des revendications 2 à 5, **caractérisé en ce que** l'amplitude d'expansion de ladite partie mobile (9, 10) est réglable en sorte de réaliser des bords tombés (3) formant avec le fond (2) un angle égal ou non à 90°, avec contre-dépouille ou non.

## Claims

1. A method of forming by hot stamping complex sheet pieces formed of a single-piece element comprising several relatively thin parts arranged in different secant planes, from a blank (6) formed of at least one layer of fibre pre-impregnated with a thermoplastic resin, in which said blank (6), previously heated, is shaped in an assembly comprising a punch (5) and a die (4), **characterised in that**:
- in a first step of descent of the punch into the die, the part of said blank (6) that is to constitute the bottom (2) or similar of the piece to be obtained (1) is pressed against the bottom (4a) of the die (4) by a first bottom part (8) of the punch (5), and then
- in a second step of deployment of one or more lateral parts (10) of the punch (5), the part or parts of the blank (6) constituting the turned-over edges (3) of the said piece are pressed against the flanks of the die by a rotation of the said lateral parts (10) about axes of articulation of said lateral parts on the bottom part, the rough-formed part thus obtained then being removed from the die.

2. Equipment for implementing the method according to claim 1, formed of a punch (5) and a die (4), **characterised in that** said punch (5) is formed of:
- a main body (7) with uniaxial movement with regard to the die (4),
- a pressing assembly in a form integral with the main body (7), comprising:
• a first part (8) providing a moulding face (8a) corresponding to said bottom part (2) or similar of said rough-formed part to be produced,
• a second part (9) providing one or more moulding faces (10a to 10c) corresponding to the third turned-over sides (3) of the rough-formed part,
• said second part (9) being mounted so as to be able to move between two positions, one referred to as the expansion position, in which the moulding faces (8a;10a to 10d) of said first (8) and second (9) parts define a moulding surface corresponding to the internal face of said rough-formed part and the other, referred to as the shrinkage position, in which said second part (9) is recessed with respect to said first position, said second part being formed of pieces (10) whose moulding face (10a, 10b, 10c) corresponds to the internal flanks (3) of the rough part and to the fillet area (22) of connection of the internal flanks to the bottom, the said pieces (10) being articulated on said first part (8) at the periphery of said first part (8),
- and means able to:
• hold said second part (9) in the shrinkage position,
• and to make it move to the expansion position as soon as possible at the moment of contact of said blank (6) against the bottom (4a) of the die (4).

3. Equipment according to claim 2, **characterised in that**:
- said second part (9) is formed of pieces (10) whose moulding face (10a, 10b, 10c) corresponds to the internal flanks (3) of the rough-formed part and to the curved areas of connection of said flanks (3) to said bottom (2), said pieces (10) being articulated on said first part. (8) in the vicinity of the periphery of its moulding face (8a), and returned elastically to said shrinkage position,
- and said means able to move from one position to another is formed of:
• on the one hand, a system (15, 16) of the cam/cam groove type, the cam (15) being arranged on one of the two elements formed by the main body (7) and the second part (9) and the groove (16) being arranged on the other element,
• on the other hand, a mounting of said first part (8) on the main body (7) sliding axially to the punch (5), so as to put in service said cam/cam groove system (15, 16) as soon as possible at said moment of contact of said blank (6) against the bottom (4a) of the die (4).

4. Equipment according to claim 3, **characterised in that** said sliding mounting between said first part (8) on said main body (7) is a spring system working in compression (21) for returning said part (8) to a position away from the main body (7).

5. Equipment according to one of claims 2 to 4, **characterised in that** it comprises a device for the end of downward travel of the punch (5) formed of a stop (23), preferably adjustable, fixed to said main body (7) and cooperating with the die (4).

6. Equipment according to one of claims 2 to 5, **characterised in that** the amplitude of expansion of said movable part (9, 10) is adjustable so as to produce turned-over sides (3) forming with the bottom (2) an angle equal or not to 90°, with undercut or not.

## Patentansprüche

1. Verfahren zum Formen durch Warmprägen von komplexen Blechteilen aus einem Monoblockelement, das mehrere Abschnitte mit verhältnismäßig geringer Dicke, die in unterschiedlichen Sekantenebenen angeordnet sind, umfasst, ausgehend von einem Zuschnitt (6), der aus wenigstens einer Lage aus vorimprägnierten Fasern eines thermoplastischen Harzes gebildet ist, wobei in dem Verfahren der Zuschnitt (6), der im Voraus erwärmt wird, in einer Baueinheit geformt wird, die einen Stempel (5) und eine Matrize (4) umfasst, **dadurch gekennzeichnet, dass**:
- in einem ersten Schritt des Absenkens des Stempels in die Matrize jener Teil des Zuschnitts (6), der den Boden (2) oder dergleichen des zu erhaltenden Teils (1) bilden soll, durch einen ersten, unteren Teil (8) des Stempels (5) gegen den Boden (4a) der Matrize (4) gepresst wird, und dann
- in einem zweiten Schritt des Ausfahrens eines oder mehrerer seitlicher Teile (10) des Stempels (5) der Teil oder die Teile des Zuschnitts (6), die den oder die umgebogenen Ränder (3) des Teils bilden, durch eine Drehung der seitlichen Teile (10) um die Schwenkachse der seitlichen Teile im unteren Teil gegen die Seitenflächen der Matrize gepresst werden, wobei der auf diese Weise erhaltene Rohling anschließend ausgeformt wird.

2. Werkzeug für die Ausführung des Verfahrens nach Anspruch 1, das aus einem Stempel (5) und einer Matrize (4) gebildet ist, **dadurch gekennzeichnet, dass** der Stempel (5) gebildet ist aus:
- einem Hauptkörper (7) mit einachsiger Verlagerung in Bezug auf die Matrize (4),
- einer Formpressbaugruppe, die mit dem Hauptkörper (7) fest verbunden ist und umfasst:
- einen ersten Teil (8), der eine Formungsfläche (8a) aufweist, die dem Teil des Bodens (2) oder dergleichen des zu verwirklichenden Rohlings entspricht,
- einen zweiten Teil (9), der eine oder mehrere -Formungsflächen (10a bis 10c) aufweist, die den umgebogenen Rändern (3) des Rohlings entsprechen,
- wobei der zweite Teil (9) zwischen zwei Positionen, einer so genannten Expansionsposition, in der die Formungsflächen (8a; 10a bis 10d) des ersten Teils (8) und des zweiten Teils (9) eine Formungsoberfläche definieren, die der Innenfläche des Rohlings entspricht, und einer so genannten zurückgezogenen Position, in der der zweite Teil (9) in Bezug auf die erste Position zurückgezogen ist, beweglich angebracht ist, wobei der zweite Teil aus Teilen (10) gebildet ist, deren Formungsfläche (10a, 10b, 10c) den inneren Seitenflächen (3) des Rohlings sowie der Kehlungszone (22) für die Verbindung der inneren Seitenflächen mit dem Boden entspricht, wobei die Teile (10) an dem ersten Teil (8) am Umfang des ersten Teils (8) angelenkt sind,
- und Miftel, die so beschaffen sind, dass sie:
- den zweiten Teil (9) in der zurückgezogenen Position halten können, und
- ihn frühestens zum Zeitpunkt des Kontakts des Zuschnitts (6) mit dem Boden (4a) der Matrize (4) in die Expansionsposition bringen können.

3. Werkzeug nach Anspruch 2, **dadurch gekennzeichnet, dass**:
- der zweite Teil (9) aus Teilen (10) gebildet ist, deren Formurigsfläche (10a, 10b, 10c) den inneren Seitenflächen (3) des Rohlings sowie gebogenen Verbindungszonen der Seitenflächen (3) mit dem Boden (2) entspricht, wobei die Teile (10) an dem ersten Teil (8) in der Nähe des Umfangs seiner Formungsfläche (8a) angelenkt sind und in die zurückgezogene Position elastisch zurückgedrängt werden,
- und die Mittel, die einen Übergang von einer Position in die andere schaffen können, gebildet sind aus:
- einerseits einem System (15, 16) des Typs Nocken-Nockenkurve, wobei der Nocken (15) auf einem von zwei Elementen angeordnet ist, die durch den Hauptkörper (7) und den zweiten Teil (9) gebildet sind, und die Kurve (16) auf dem jeweils anderen Element angeordnet ist,
- andererseits einer Anbringung des ersten Teils (8) an dem Hauptkörper (7), der zu dem Stempel (5) axial gleitet, derart, dass das Nocken-Nockenkurven-System (15, 16) frühestens zum Zeitpunkt des Kontakts des Zuschnitts (6) mit dem Boden (4a) der Matrix (4) betätigt wird.

4. Werkzeug nach Anspruch 3, **dadurch gekennzeichnet, dass** die zwischen dem ersten Teil (8) am Hauptkörper (7) gleitende Baugruppe ein Federsystem ist, das in der ausgefahrenen Position des Hauptkörpers (7) unter Kompression (21) eine Rückstellung des Teils (8) bewirkt.

5. Werkzeug nach einem der Ansprüche 2 bis 4, **dadurch gekennzeichnet, dass** es einen Eindringhub-Anschlag des Stempels (5) aufweist, der durch einen vorzugsweise einstellbaren Anschlag (23) gebildet ist, mit dem Hauptkörper (7) fest verbunden ist und mit der Matrize (4) zusammenwirkt.

6. Werkzeug nach einem der Ansprüche 2 bis 5, **dadurch gekennzeichnet, dass** die Expansionsamplftude des beweglichen Teils (9, 10) einstellbar ist, derart, dass umgebogene Ränder (3) verwirklicht werden, die mit dem Boden (2) einen Winkel, der gleich oder ungleich 90° ist, mit oder ohne Unterschneidung bilden.
